# EUROPEAN PATENT SPECIFICATION

(11) **EP 3 487 889 B1**
(45) Date of publication and mention of the grant of the patent: **09.03.2022**
(21) Application number: 16909624.5
(22) Date of filing: 22.07.2016
(51) Int. Cl.: C08F 236/10, C08C 19/25, C08C 19/22, C08L 15/00, C08L 7/00, C08F 4/48

(54) **A METHOD FOR PRODUCING BRANCHED MODIFIED RUBBER AND A RUBBER COMPOSITION COMPRISING BRANCHED MODIFIED RUBBER PREPARED BY THE METHOD, AND USE THEREOF**
VERFAHREN ZUR HERSTELLUNG VON VERZWEIGTEM MODIFIZIERTEM KAUTSCHUK UND KAUTSCHUKZUSAMMENSETZUNG MIT NACH DEM VERFAHREN HERGESTELLTEM VERZWEIGTEM MODIFIZIERTEM KAUTSCHUK UND VERWENDUNG DAVON
PROCÉDÉ DE PRODUCTION DE CAOUTCHOUC MODIFIÉ RAMIFIÉ, COMPOSITION DE CAOUTCHOUC CONTENANT LE CAOUTCHOUC MODIFIÉ RAMIFIÉ PRÉPARÉ PAR LEDIT PROCÉDÉ, ET SON UTILISATION

(43) Date of publication of application: 29.05.2019
(73) Proprietor: Public Joint Stock Company "Sibur Holding", Tobolsk, Tyumen region 626150 (RU)
(72) Inventor: AVERKOV, Alexey Mikhailovich, Azovsky r-n Omskaya obl. 646880 (RU); ZLOBIN, Alexandr Vladimirovich, Biysk Altaisky krai 659334 (RU); TURENKO, Svetlana Viktorovna, Tomsk 634036 (RU); KHARLAMOVA, Ekaterina Vasilievna, Kargasoksky r-n Tomskaya obl. 636700 (RU)
(74) Representative: Zacco Denmark A/S
(86) International application number: PCT/RU2016/000472
(87) International publication number: WO 2018/016985

(56) References cited:
- JP-A- 2014 148 590
- US-A1- 2014 058 012
- US-B2- 8 461 263
- DATABASE WPI Week 201632 Thomson Scientific, London, GB; AN 2016-22524A XP002797121, & JP 2016 050257 A (ETIC INC) 11 April 2016 (2016-04-11)
- DATABASE WPI Week 200210 Thomson Scientific, London, GB; AN 2002-073921 XP002797122, & RU 2 175 330 C1 (SYNTHETIC RUBBER RES INST) 27 October 2001 (2001-10-27)
- DATABASE WPI Week 201101 Thomson Scientific, London, GB; AN 2010-Q02793 XP002797123, & JP 2010 275489 A (BRIDGESTONE CORP) 9 December 2010 (2010-12-09)

## Description

### TECHNICAL FIELD OF THE INVENTION

The present invention relates to the field of the manufacture of rubbers and vulcanizates based on them, which are characterized by an improved complex of hysteresis properties. In particular, the invention relates to a method for producing a branched modified rubber by anionic solution polymerization in the presence of lithium amide as an initiator, using a polyfunctional oligo- or polysiloxane modifying agent. Rubbers modified in accordance with the present invention possess an increased compatibility with such fillers as precipitated colloidal silicic acid (silica, PSF) and allow of producing vulcanizates with improved hysteresis characteristics, in particular with reduced hysteresis loss at 60°C, and good tensile stress-strain properties; such vulcanizates are used as tread rubbers in the tire industry, as well as in the manufacture of mechanical rubber goods.

### BACKGROUND OF THE INVENTION

Methods for producing modified rubber by solution polymerization of conjugated dienes and vinyl aromatic compounds in the presence of lithium amide as an initiator are known in the prior art (EP0594107; US5717043). Lithium amides are prepared *in situ,* i.e. in the polymerization medium by reacting an organolithium compound, in particular n-butyllithium, with a secondary amine such as dimethylamine, pyrrolidine, piperidine, and the like. The method by using an initiator prepared by reacting n-butyllithium with pyrrolidine provides a modified rubber with a molecular weight of 2*10⁵, a narrow molecular weight distribution of 1.09, a 1,2-unit content of 61 wt.% based on the polybutadiene part of the rubber, and a styrene content of 20 wt.% based on the rubber.

Disadvantages of the method are the necessity of using a large excess of an electron-donor additive (tetrahydrofuran) (55-fold and 70-fold molar excess relative to the amount of the added lithium in the initiator composition according to EP0594107 and US5717043, respectively) to obtain a high content of vinyl units. In patent US5717043 a larger amount of an electron-donor additive (70-fold excess) is used because the temperature is raised from 50°C to 85°C to reduce the time of the synthesis from 2 hours to 1 hour, compared to patent EP0594107; if the amount of electron-donor additive does not increased, the content of vinyl units will be reduced. Also, the above-indicated patents teach rubber mixtures containing only carbon black as a filler since the introduction of amino groups into the rubber improves its affinity for carbon black. An improved compatibility with other fillers, for example, with precipitated colloidal silica (silica, PSF) is insignificant or is not observed at all.

Patent US8461263 discloses methods for producing modified rubber by solution polymerization of a conjugated diene and/or a vinyl aromatic compound in the presence of n-butyllithium as an initiator, followed by terminal modification. Thus, a modifying agent is a polysiloxane, for example, α,ω-bis(epoxyethyl)polydimethylsiloxane, α,ω-bis(2-methyldiepoxysilylethyl)polydimethylsiloxane, and the like, used simultaneously with an organosilane, such as 3-chloropropyltriethoxysilane, 3-aminopropylmethyldiethoxysilane and the like. The method provides a polymer having an average molecular weight of from 235,000 to 256,000 g/mol, a vinyl content of from 53 to 57 wt.% based on the rubber (74 to 79 wt.% based on the polybutadiene part of the rubber), a Mooney viscosity of from 61 to 66, the modification degree of oligosiloxane of up to 13 mol.%, and the modification degree of organosilane of up to 75 mol.%.

A disadvantage of this method is the necessity of using a large excess of an electron- donor additive, namely tetrahydrofuran (150-fold molar excess based on lithium), to increase the amount of 1,2-units. Another disadvantage is the necessity of using two types of modifying agents, in particular polysiloxane containing an epoxy group and alkoxyorganosilane.

In addition, other methods for preparing modified rubbers by using simultaneously a lithium amide as an initiator and a modifying agent, namely polysiloxane, are known in the prior art. Thus, application JP2014193983 discloses a method for producing a modified rubber based on a conjugated diene, in particular 1,3-butadiene, and a vinyl aromatic derivative, for example, p-(t-butyldimethylsilyloxy)styrene, in the presence of an organolithium compound, preferably an alkyllithium or lithium amide, which can be obtained by reacting n-butyllithium, for example, with dibutylamine, pyrrolidine, or hexamethyleneimine, followed by modifying the "living" polymer with polysiloxane comprising, for example, an alkoxy or epoxy functional group. The description of the known invention mentions the possibility of producing a rubber by using simultaneously lithium amide as an initiator and a polysiloxane as a modifying agent, but the description of a method for producing a rubber, as well the properties of said rubber, is not provided. The main disadvantage of the known method is the necessity of using an expensive specific monomer that requires additional expenditure, the necessity of post-polymerization modification of the rubber to achieve desired properties of vulcanizates based thereon.

The closest technical solution is a method for producing a modified rubber, as described in application JP 2014148590, which is considered as a prototype. The method is carried out in the presence of an organolithium compound, such as n-butyllithium, as an initiator, and a modifying agent. Also, the description of the method mentions the possibility of using, as an initiator, lithium amide obtained in the reaction of an organolithium compound, such as n-butyllithium, with a secondary amine, such as dibutylamine, dihexylamine, dibenzylamine, pyrrolidine, and the like. However, specific embodiments of the invention, where amide lithium and a modifying agent are used simultaneously, are not disclosed.

The modifying agent is a polyorganosiloxane of the general formula:
-Si(R₁R₂X₁)-O-[-Si(R₃X₂)-O-]ₘ-[-Si(R₄X₃)-O-]ₙ-[-Si(R₅R₆)-O-]ₖ-Si(R₇R₈X₄)-,
wherein R₁₋₈ are alkyl group having from 1 to 6 carbon atoms or aryl group having from 6 to 12 carbon atoms, X₁₋₄ are, for example, an alkoxyl or epoxy functional group. The method provides a modified polymer having an average molecular weight of 100,000 to 3,000,000 g/mol, a molecular weight distribution of from 1.1 to 3.0, and a Mooney viscosity of 20 to 100.

A disadvantage of the rubber produced by the known method is a small amount of 1,2-units (62,3 to 62,6 wt.% based on the polybutadiene part). In addition, in the process of branching the rubber, the known invention uses SnCl₄ in addition to polysiloxane, and the inventors recommend to carry out the modification process preferably in two sequentially steps, wherein at the first step there is used a branching agent and then a terminal modifier, which elongates the cycle of the rubber production. The technical result of the known invention is achieved by using in vulcanizates a modified rubber together with precipitated colloidal silicic acid (silica, PSF) with a pH from 8 to 11, which provides improved elastic-hysteresis properties and abrasion of the vulcanizates. The use of the same rubber in vulcanizates filled with commonly used precipitated colloidal silicic acid with a pH of 6, in particular Zeosil 1165MP, deteriorates abrasion of the vulcanizate by 45%, as compared with the vulcanizate produced by using unmodified rubber Nipol 1502 (Nippon Zeon).

Thus, the known modification method allows of producing rubbers that provide improved properties of vulcanizates only in combination with specific kinds of PSF, which limits consumer choice in selection of ingredients for vulcanizates.

Therefore, there is a need to develop new methods of targeted modification of rubbers to produce on their basis vulcanizates characterized by improved properties.

The object of the present invention is to provide a method for producing a modified rubber by solution polymerization in the presence of lithium amide as an initiator, by using a polyfunctional modifying agent, such as oligosiloxane or polysiloxane.

The technical result of the present invention is to improve the hysteresis characteristics of vulcanizates obtained based on the rubbers produced by the claimed method, which allows a reduced rolling loss in the case of treads and other auto tire elements, or reduced hysteresis loss when using mechanical rubber goods operating under dynamic conditions. The improvement of the hysteresis properties is expressed in a reduction in the mechanical loss tangent by 5-15% at 60°C.

### BRIEF DESCRIPTION OF FIGURES

Figures 1-9 illustrating the present invention provide data on the branching degree and functionalization of the rubbers produced according to the present invention, according to the data of gel permeation chromatography (GPC).
Fig.1 shows differential curves of the molecular weight distribution of the rubber of Example 1 (with lithium pyrrolidide).
Fig.2 shows differential curves of the molecular weight distribution of the rubber of Example 2 (modification with Coatosil MP-200).
Fig.3 shows differential curves of the molecular weight distribution of the rubber of Example 3 (modification with Silres HP1250).
Fig.4 shows differential curves of the molecular weight distribution of the rubber of Example 4 (with lithium pyrrolidide and modification with Coatosil MP-200).
Fig.5 shows differential curves of the molecular weight distribution of the rubber of Example 5 (with lithium pyrrolidide and modification with Silres HP1250).
Fig.6 shows differential curves of the molecular weight distribution of the rubber of Example 6 (with lithium morpholide and modification with Coatosil MP-200).
Fig.7 shows differential curves of the molecular weight distribution of the rubber of Example 7 (with lithium diethylamide and modification with Coatosil MP-200).
Fig.8 shows differential curves of the molecular weight distribution of the rubber of Example 7 (prior to modification with Coatosil MP-200).
Fig.9 shows differential curves of the molecular weight distribution of the rubber of Example 9 (commercially available rubber).

### DESCRIPTION OF THE INVENTION

The present invention relates to a method for producing a modified rubber based on a conjugated diene and/or a vinyl aromatic compound in the presence of a lithium initiator, namely an organolithium compound comprising an amine functional group and prepared by reacting the organolithium compound and a secondary amine *in situ,* or prior to its introduction into a polymerization medium, and a polyfunctional modifying agent comprising in its structure both epoxy and alkoxy functionalities. In addition, the invention also relates to a branched modified rubber produced by the above method, and to rubber compositions comprising the branched modified rubbers of the present invention, and to the use of such rubber compositions in the manufacture of tire treads.

The branched modified rubber according to the present invention is produced by using an initiator, namely lithium amide, followed by branching and modifying the "living" polymer with a polyfunctional modifying agent.

The method for producing said rubber comprises two steps: the step of anionic polymerization and the step of modification.

At the anionic polymerization step, starting monomers, a solvent, an electron- donor agent and an initiator are fed to a polymerization reactor.

The diagram below shows, but does not limit to, the general scheme of the step of anionic polymerization.

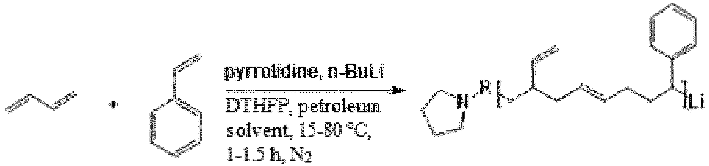

The starting monomers are conjugated dienes and vinyl aromatic compounds in a weight ratio of from 0 to 1, preferably from 0.1 to 0.9, more preferably from 0.2 to 0.7.

Suitable conjugated dienes include conjugated dienes with 4 to 12 carbon atoms, such as 1,3-butadiene, 2-methyl-1,3-butadiene (isoprene), 2-ethyl-1,3-butadiene, 2,3-di(C₁-C₅ alkyl)-1,3-butadiene, 2,3-dimethyl-1,3-butadiene, 2,3-diethyl-1,3-butadiene, 2-methyl-3-ethyl-1,3-butadiene, 2-methyl-3-isopropyl-1,3-butadiene, phenyl-1,3-butadiene, 1,3-pentadiene, 2,4-hexadiene, 2-methyl-pentadiene, and 4-methyl-pentadiene. 1,3-Butadiene or isoprene is preferred.

Suitable vinyl aromatic compounds include, in particular, styrene, α-methylstyrene, ortho-, meta- and para-methylstyrene, 3-vinyltoluene, ethylvinylbenzene, 4-cyclohexylstyrene, p-tert-butylstyrene, methoxystyrene, vinylmesitylene, divinylbenzene, 1-vinylnaphthalene, and 2,4,6-trimetilstyrene. Styrene or α-methylstyrene is preferred.

It is preferable to use conjugated dienes and vinyl aromatic compounds with a purity of at least 99.5%, and moisture content of not more than 50 ppm (parts/million).

The polymerization is carried out in any batch or continuous apparatus for an anionic polymerization process (see, for example, Reyhsfeld V.O., Shein V.S., Ermakov V.I., Reaction equipment and machinery factories of organic synthesis and synthetic rubber, p.180).

Suitable solvents for anionic polymerization are solvents with purity of preferably 99% or more, which are saturated hydrocarbons, such as pentane, hexane, heptane, cyclopentane, cyclohexane, methylcyclopentane, and methylcyclohexane; aromatic hydrocarbons, such as benzene, toluene, and n-xylene, and mixtures thereof in various ratios. Petroleum solvent representing a mixture of solvents, is the most preferable, for example, petroleum solvent of hexane-heptane fraction P1-65/75. The weight ratio of a solvent to the total amount of monomers is from 2 to 20, preferably 4 to 12, more preferably from 6 to 8.

The initiator suitable for anionic polymerization is an initiator for anionic polymerization, comprising an amine functional group, which is obtained by reacting an organolithium compound with a secondary amine *in situ,* i.e. in a polymerization medium, or in advance, i.e. prior its introduction into the polymerization medium, for example, as described in patent US5393721.

The organolithium compound is an alkyllithium compound, such as methyllithium, ethyllithium, propyllithium, n-butyllithium, *sec*-butyllithium, *ter*t-butyllithium, n-hexyllithium, or n-octyllithium; an aryllithium compound, such as phenyllithium, or tolyllithium; an alkenyllithium compound, for example, vinyllithium, or propenyllithium. n-Butyllithium or sec-butyllithium is preferred.

A suitable initiator to obtain secondary amines is an amine of the general formula (1): 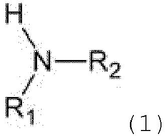 where R₁ and R₂ may be the same or different and represent a hydrocarbon group having from 1 to 20 carbon atoms, selected from an aliphatic group, an alicyclic group, and an aromatic group. Specific examples of such secondary amines include, but are not limited to, dimethylamine, diethylamine, dipropylamine, di-*n*-butylamine, diisobutylamine, dipentylalmine, dihexylamine, diheptylamine, dioctylamine, dicyclohexylamine, N,N-butylisopropylamine, dibenzylamine, methylbenzylamine, methylhexylamine, and ethylhexylamine. More preferred amines are amines, wherein R₁ and R₂ represent an aliphatic hydrocarbon group having from 1 to 10 carbon atoms, for example dimethylalmine, diethylamine, dipropylamine, diisopropylamine, di-*n*-butylamine, dipentylalmine, methylhexylamine, or ethylhexylamine. Dimethyalmine, diethylamine, dipropylamine, diisopropylamine, and di-*n*-butylamine are most preferred.

Another amine suitable for preparing the initiator by using a secondary amine is an amine of the general formula (2): 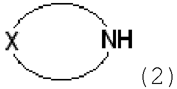 wherein X represents a (CR₃R₄)ₙ group, wherein R₃ and R₄ are the same or different and represent a hydrogen atom or a hydrocarbyl group having from 1 to 10 carbon atoms, selected from an aliphatic group, an alicyclic group, and an aromatic group, and n is an integer from 3 to 20, wherein the amine cycle or substituents R₃ and R₄ may comprise independently from each other an oxygen atom, a sulfur atom, or a nitrogen atom having one alkyl or aryl substituent, for example, pyrrolidine, piperidine, hexamethyleneimine, 2-methylpiperidine, morpholine, thiomorpholine, N-methylpiperazine, or N-phenylpiperazine. Pyrrolidine, piperidine, and hexamethyleneimine are preferred.

The amount of the used initiator is determined by the required molecular weight of the rubber and by the presence of impurities in the starting components. Preferably, the amount of the used initiator can vary from 1 to 50 mol/t of the rubber, preferably from 2 to 25 mol/t of the rubber, more preferably from 3 to 10 mol/t of the rubber.

The electron-donor additive is bis(2-oxolanyl)methane, 2,2-bis (2-oxolanyl)propane, (ditetrahydrofurylpropane - DTHFP), 1,1-bis(2-oxolanyl)ethane, 2,2-bis(2-oxolanyl)butane, 2,2-bis(5-methyl-2-oxolanyl)propane, 2,2-bis(3,4,5-trimethyl-2-oxolanyl)propane, tetrahydrofuran, dialkyl ethers of mono- and oligoalkylene glycol, crown-ether, tertiary amine, such as tetramethylenediamine, or a linear tetrahydrofuran oligomer. Tetramethylenediamine, tetrahydrofuran, and DTHFP are preferred.

The molar ratio of the electron-donor additive to the initiator is from 0.5 to 4, preferably from 0.8 to 2, more preferably from 1 to 1.5.

A temperature mode of the claimed method is largely determined by the heat of the exothermic reaction of copolymerization of a conjugated diene and/or a vinyl aromatic compound. Thus, the polymerization process is carried out at temperature of from (-30)°C to 120°C, preferably from 0°C to 100°C, more preferably from 15°C to 80°C, in an inert atmosphere at a pressure of from 0 to 10 atm, preferably 0.5 to 5 atm, more preferably from 1 to 3 atm.

In accordance with the claimed method, the duration of the process may range from 10 minutes to 120 minutes, preferably from 20 minutes to 80 minutes, more preferably from 30 minutes to 50 minutes.

The polymerization until reaching a monomer conversion of 95% or more is preferred.

The starting monomers, the solvent, and the electron-donor additive may be introduced into the polymerization reactor in any order. Preferably, the components are introduced in the following order: the solvent, the starting monomers, and the electron-donor additive, followed by introducing the obtained initiator or components for its preparation *in situ.*

At the modification step, when the monomer conversion reaches 95% or higher, the process of branching and modifying the obtained rubber is carried out by feeding into the polymerization reactor a solution of a polyfunctional modifying agent, which is an oligo- or polysiloxane containing alkoxy and epoxy groups: epoxyalkyl or epoxyaryl groups.

Said oligo- or polysiloxane may be represented by the general formula (3) 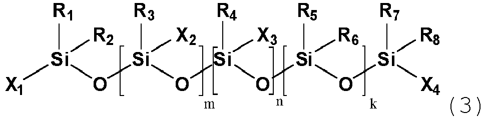 wherein R₁-R₈ are an alkoxy group with a C₁-C₂₀ alkyl chain and/or a C₁-C₂₀ alkyl group, and/or a C₆-C₁₂ aryl group; X₁ and X₄ are an epoxy group, an epoxyalkyl group, or an epoxyaryl group, for example, 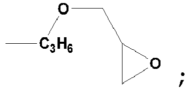 m, n, and k may be the same or different and may range from 0 to 500, preferably from 2 to 100, more preferably from 4 to 50. An average molecular weight of oligo- or polysiloxane may vary within a range of from 200 to 100000 g/mol, preferably from 300 to 30000 g/mol, more preferably from 500 to 10000 g/mol. Thus, oligo- and polysiloxanes are liquids with a kinematic viscosity of from 50 to 20000 mm²/s, more preferably from 100 to 10000 mm²/s, and even more preferably from 200 to 5000 mm²/s.

The presence of two types of functional groups in the modifying agent allows of branching a rubber through the formation of a Si-C bond. An epoxy functional group allows of branching through the formation of a C-C bond, and allows of binding the remaining lithium amide, which is a polymerization initiator and which remains in the polymer product due to incomplete reaction with the monomers at the step of initiating the polymerization. This results in additional branching and modification of the rubber with amino and hydroxyl groups, and eliminates contamination of the rubber and the solvent with residual amine, which has a positive effect on the properties of the vulcanizates produced from this rubber. The amount of the used oligosiloxane may range from 0.01 to 10 wt.% based on the rubber, preferably from 0.1 to 1 wt.% based on the rubber, more preferably from 0.3 to 0.5 wt.% based on the rubber. The amount of oligo- or polysiloxane is determined by the amount of the used initiator, namely oligo- or polysiloxane is used in a twofold excess based on the epoxy groups, with the assumption that a part of the epoxy groups reacts with the "living" polymer chains and binds unreacted lithium amide, and the other part remains without changes and provides the rubber with functional groups that improve the properties of the vulcanizates.

The diagram shows, but does not limit to, the general scheme of the modification step.

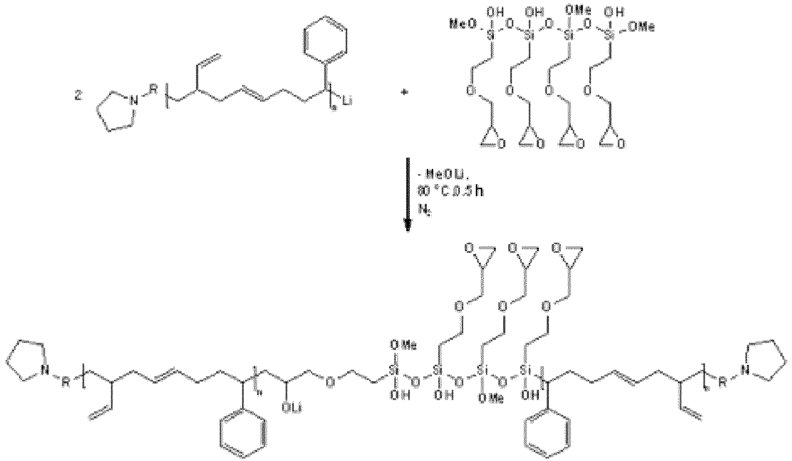

Unbound lithium amide (lithium pyrrolidide in the scheme) reacts, as described above, with the epoxy groups of the modifying agent.

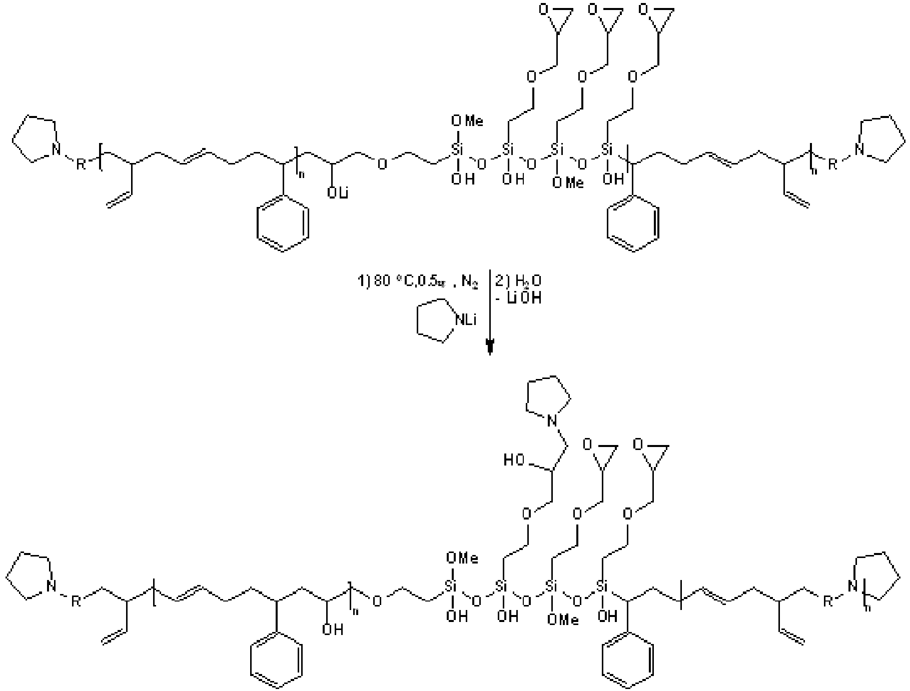

The process of branching and modification is carried out at temperature of from 20°C to 120°C, preferably from 50°C to 100°C, more preferably from 70°C to 80°C, in an inert atmosphere at a pressure of from 0 to 10 atm, preferably 0.5 to 5 atm, more preferably from 1 to 3 atm, under vigorous stirring. The temperature mode of the process is largely determined by the heat of the exothermic reaction of branching and modification of the resulting rubber, and is selected so as to reduce the energy and time of the process.

The time of the reaction is usually from 5 to 100 minutes, preferably from 20 to 60 minutes, more preferably from 30 to 40 minutes. The duration of the modification step is determined by the degree of branching and modification to be achieved. As a result, the process of branching and modification provides rubbers having a modification degree of from 0 to 100%, preferably from 20 to 80%, more preferably from 30 to 50%, and a branching degree of from 100 to 0%, preferably from 80 to 20%, more preferably from 70 to 50%.

The resulting polymerizate is mixed with an antioxidant, optionally filled with an oil-filler, and then degassed; the rubber is separated and dried.

The antioxidant for the rubber may be a phenolic or amine-type compound or another antioxidant, including a composite antioxidant recommended for the stabilization of rubbers. Examples of phenolic antioxidants include: 2,6-di-*tert*-butyl-4-methylphenol (ionol, Agidol 1, alkofen, antioxidant 264); 2,2-di-(4-methyl-6-*tert*-butylphenol)methane (antioxidant 2246, Agidol 2, Bisalkofen), 2-methyl-4,6-bis(octylsulfanylmethyl)phenol (IRGANOX 1520L); pentaerythritol tetrakis(3-(3,5-di-*ter*t-butyl-4-hydroxyphenyl)propionate) (IRGANOX 1010); ester of benzenpropanoic acid and 3,5-bis(1,1-dimethyl-ethyl)-4-hydroxy-C₇-C₉ branched alkyl (IRGANOX 1135); 2,6-di-*tert*-butyl-4-(4,6-bis(octylthio)-1,3,5-triazin-2-yl-amino)phenol (BNX^{™} 565, Mayzo Inc.); and octadecyl-3-(3,5-di-*tert*-butyl-4-hydroxyphenyl)propionate (IRGANOX 1076). Examples of amine-type antioxidants include N-isopropyl-N'-phenyl-p-phenylenediamine (IPPD, VULCANOX 4010), N-(1,3-dimethyl-butyl)-N'-phenyl-p-phenylenediamine (Antioxidant 4020, 6PPD), N-(1,3-dimethyl-phenyl)-N'-phenyl-p-phenylenediamine (7PPD), N-2-ethylhexyl-N'-phenyl-p-phenylenediamine (Novantox 8 PFDA, antioxidant S789), N,N'-diphenyl-p-phenylenediamine (DPPD), and composite antioxidants such Santoflex^{™} 134PD, which are a mixture of products 7PPD and 6PPD in a ratio of 1:2. Antioxidants are introduced into the polymerizate in an amount of from 0.2 to 5.0 wt.% of the weight of the resulting rubber. Preferably, the antioxidant is fed in an amount of 0.3 to 2.5 wt.% based on the rubber.

The oil-fillers for the rubbers include oils, such as TDAE (treated distillate aromatic extract), TRAE (treated residual aromatic extract), MES (mild extract solvate), and naphthenic oils (NAP). The possibility of using vegetable oils, such as rapeseed, to fill rubbers is not excluded, as well. DAE oils (aromatic oils) can be also used, but they are not desirable because of a high content of carcinogenic substances. Mixtures of different oils are also applicable. The most common oil-fillers for the rubbers are oils of the TDAE group, for example NORMAN 346 ("Orgkhim", JSC), Vivatec 500 (Hansen & Rosental), and Nytex 840 (Nynas). Examples of MES oils include Vivatec 200 (Hansen & Rosental), Nytex 832 (Nynas), and NORMAN 132 ("Orgkhim", JSC). Examples of DAE oils include PN-6 ("Orgkhim", JSC). Examples of NAP oils include Nytex 4700 (Nynas) and Octopus N317 (Petroyag, Turkey). Examples of TRAE oils include NORMAN 583 ("Orgkhim", JSC). The oil-filler may be supplied in an amount of 5 to 80 weight parts per 100 rubber weight parts, depending on the processing properties of the rubber to be achieved. However, the rubber with an oil content of 25-30 wt.%, which corresponds to 34 to 44 weight parts of the oil per 100 rubber weight parts, is obtained most frequently.

The above-disclosed method provides branched modified butadiene, styrene-butadiene and styrene-isoprene-butadiene rubbers, preferably a styrene-butadiene rubber with an average molecular weight of from 50000 to 500000, preferably from 100000 to 450000, more preferably from 200000 to 400000 g/mol, a polydispersity index of from 1 to 3, the content of 1,2-butadiene units of from 40 to 100%, preferably from 50 to 80%, more preferably from 60 to 70 wt.%, based on the polybutadiene part of the rubber, the content of 3,4-isoprene units, if present, of from 30 to 100 wt.% based on the isoprene part; the total content of 1,2-butadiene and 3,4-isoprene units of from 20 to 100 wt.% based on the rubber; and the content of vinyl aromatic units of from 0 to 50%, preferably from 10 to 45, more preferably from 15 to 40 wt.% based on the rubber. The branching degree of the resulting modified rubber ranges between 10 and 60%.

The fields of application of rubbers produced by the described method are rubber goods operating under dynamic conditions, which require reduced hysteresis loss during operation. Therefore, these rubbers can be used in vulcanizates for tires, and vulcanizates for mechanical rubber goods. The use of the rubbers according to the present invention in these vulcanizates increases the effectiveness of interfacial interaction between a polymer and a polar filler, which, as a consequence, ensures a hysteresis decrease. As for using in tires, it means vulcanizates for treads, tire shoulders, belts, and sidewalls. However, it is most expedient to use these rubbers in highly silica-filled tread rubbers of auto tires to reduce rolling loss and, as a consequence, to improve vehicle fuel efficiency.

In accordance with the present invention, vulcanizates comprising said modified rubbers can be produced based on a mixture of several, preferably two or three, rubbers selected from the group of styrene-butadiene (A), butadiene (B), and isoprene (C), styrene-isoprene-butadiene (D) or other rubbers which can be used to obtain rubbers for a given purpose, or one of the rubbers produced according to the above-disclosed method.

Rubber mixtures according to the invention may also contain the following ingredients, which are traditional for tire and, in particular, tread rubbers (weight parts per 100 rubber weight parts):
a) 10-150 wt. parts of silica;
b) 0-150 wt. parts of carbon black;
c) 0.5-30 wt. parts of silanizing agent;
g) a vulcanizing group comprising sulfur or a sulfur donor; accelerators, such as sulfenamides, thiurams, thiazoles, guanidines, phosphates, and the like, and a combination thereof, which are used to accelerate the vulcanization process and to obtain optimal structure of the vulcanization network; activators, such as metal oxides, amines, and the like, among which zinc oxide is most commonly used; vulcanization retarders, among which Santogard PVI is most commonly used;
d) processing additives improving dispersing of fillers and processability of rubber mixtures;
e) plasticizers; softeners, for example, petroleum products; vegetable, synthetic etheric, synthetic oligomeric functionalized and non-functionalized products; and products derived from coal-mining processes;
f) anti-aging agents/antiozonants/anti-fatigue agents of physical and chemical action;
h) other components providing the required complex of processing, vulcanizing, mechanical and physical, and operational characteristics, such as modifiers; fillers, including fibrous, layered, and polymer fillers (such as cross-linked polymeric gels); agents that prevent reversion during the vulcanization and enhance heat-resistance of the rubbers; improving stickiness.

Vulcanizates can be produced by using butadiene and isoprene rubbers prepared by using various catalyst systems; vulcanizates also may comprise a styrene-butadiene copolymer prepared in emulsion (aqueous phase) or solution (organic solvent). The rubber mixtures, which are the subject matter of the present invention, can be prepared by using natural rubber of various manufactures, brands and grades: RSS (Ribbed Smoked Sheet), IRQPC (International Standards of Quality and Packing of Natural Rubber).

The elastomeric part of a rubber composition may also include a ternary copolymer of styrene, isoprene, and butadiene produced in the form of emulsion (aqueous phase) and solution (organic solvent) by polymerization (see RU2058322, RU2124529).

It is possible to use other elastomers and copolymers applicable for tire rubbers, such as an isoprene-butadiene copolymer, polybutadiene with a high content of 1,2-butadiene units, polyisoprene with a high content of 3,4-isoprene units, which can be produced by the methods disclosed, for example, in RU2494116, RU2377258, US4647635, US4174431 or RU2070891.

The rubber mixtures may also include oil-filled rubbers, wherein the content of such rubbers in vulcanizate, as a rule, increases to provide the total amount of all elastomers in the vulcanizate, excluding additives therein, of 100 wt. parts.

Each of the rubbers constituting the disclosed vulcanizates can have a branched structure, such as a star-shaped structure of the polymer chains. The branching may be provided by a variety of methods (see, for example, US 4,523,618, US 5066721A, US 5422403, US 5514756, US 5541264, and US 4575534), in particular, by using at the polymerization step such known branching agents as SiCl₄, SnCl₄, divinylbenzene, and others.

Reinforcing fillers for the rubber mixtures according to the present invention include a synthetic amorphous silicon dioxide (silica), and preferably precipitated silica, which are used alone or in combination with carbon black. It is possible to use diphase fillers, which are silica with black carbon applied on its surface, and silica that has a surface impregnated with an addition agent or that is chemically modified. Silica produced by a pyrogenic method also is applicable.

Silica used in the rubber mixtures of the present invention is characterized by a BET surface ranging between 40 an 600 m²/g and an oil absorption (DBP) value ranging between 50 and 400 cm³/100g. In a preferable embodiment, silica has a BET surface of from 100 to 250 m²/g, a CTAB surface of from 100 to 250 m²/g, and oil absorption (DBP) of between 150 and 250 cm³/100 g (determined according to National State Standard 25699.2-90; EP157703). Furthermore, for purposes of the present invention there are useful, for example, Zeosil 1165MP, Zeosil 1165 GR, Hi-Sil 210, Hi-Sil 243, Ultrasil VN2, Ultrasil VN3, Ultrasil VN3 GR, as well as other brands of silica, preferably precipitated or used for elastomer reinforcement.

The rubber mixtures comprising elastomer composites and silica-filled rubbers comprise silanizing agents (coupling agents of silica with elastomers). Most frequently used coupling agents include bis(3-triethoxysilylpropyl)tetrasulfide, bis(2-triethoxysilylethyl)tetrasulfide, bis(3-trimethoxypropyl)tetrasulfide, bis(2-trimethoxysilylethyl)tetrasulfide, 3-mercaptopropyltrimethoxysilane, 3-mercaptopropyltriethoxysilane, 2-mercaptoethyltrimethoxysilane, 2-mercaptoethyltriethoxysilane, 3-nitropropyltrimethoxysilane, 3-nitropropyltriethoxysilane, 3-chloropropyltrimethoxysilane, 3-chloropropyltriethoxysilane, 2-chloroethyltriethoxysilane, 3-trimethoxysilylpropyl-N,N-dimethylthiocarbamoyltetrasulfide, 3-trimethoxysilylpropylbenzothiazol tetrasulfide, and 3-triethoxysilylpropylmethacrylate monosulfide. Among the above-recited components, bis(3-triethoxysilylpropyl)tetrasulfide and 3-trimethoxysilylpropylbenzothiazol tetrasulfide are most preferred.

In addition, coupling agents, which are compositions of the above-recited compounds and other compounds used for this purpose, can be used with a powdered carrier, for example, black carbon.

It is possible to use other coupling agents intended to improve compatibility of silica to a rubber, for example, such as NXT and NXT Z 100 (produced by Momentive, USA).

The content of silanizing agents in vulcanizate is determined so that the amount of the basic active agent, except a carrier in the case of a composite silanizing agent, ranges from 1 to 30% wt., most preferably from 5 to 25 wt%, based on silica.

Rubber compositions are vulcanized by using vulcanizing agents known in the prior art, for example, elemental sulfur, sulfur donors, such as N,N'-dimorpholyl disulfide, polymeric polysulfides, etc. Elemental sulfur and polymeric sulfur are most commonly used in the tire industry. A dose of vulcanizing agents in vulcanizate is known to be, in general, between 0.5 and 4.0 wt. parts, sometimes may reach 10 wt. parts per 100 rubber wt. parts. Usually, sulfur is used together with such ingredients as vulcanization activators, in particular, oxides and hydroxides of alkaline-earth metals (Zn, Mg, and Ca) in combination with fatty acids; accelerators, in particular, sulfenamides, thiazoles, thiurams, guanidines, urine derivatives, etc.; and vulcanization retarders, in particular, phthalic anhydride, N-nitrosodiphenylamine, and cyclohexylthiophthalimide. Their amounts depend on the amount of the vulcanizing agent and requirements for vulcanization kinetics and the structure of a vulcanization network.

Silica-filled rubber compositions also comprise, as a rule, processing additives, which improve dispersing of fillers and processability of the rubber compositions. These ingredients frequently include fatty acid derivatives (zinc salts and esters, and mixtures thereof) that enhance the dispersing of fillers and reduce the viscosity of the composition. An example may be products based on fatty acid derivatives known under the brand names Struktol E44, Struktol GTI, and Actiplast ST.

Plasticizers and softeners are petroleum products, vegetable products, synthetic esters, and products derived from coal-mining processes; synthetic oligomeric functionalized and non-functionalized products can also be components of rubber compositions.

The tire rubbers usually include the following ingredients: antioxidants, antiozonants, anti-fatigue agents, and other components that provide the required complex processing, vulcanized, physical and mechanical, and operational characteristics, such as modifiers; fillers including fibrous, layered, and polymer fillers (such as cross-linked polymeric gels); agents preventing reversion during vulcanization and enhancing the heat-resistance of the rubbers; and tackifiers. The nature of such compounds and their content in vulcanizate depends on the required properties of the rubber compositions and vulcanizates and are well known to those skilled in the field.

Compositions are prepared by methods known in the art and disclosed, for example, in Jon S. Dick, Rubber Technology. Compounding and Testing for Performance (pp. 606-616), preferably by using closed rubber mixers, for example, Banbury or Intermix types. The mixing process can be carried out in two or three steps. Moreover, the second or third step is intended to add a vulcanizing group to the mixture of components. The curing temperature is 130 to 180°C, preferably 140 to 170°C.

The invention is illustrated by the following experimental examples.

### Example 1. (comparative, according to the prototype) Polymerization in the presence of n-butyllithium and pyrrolidine

A styrene-butadiene rubber was produced in a 2L Buchi reactor with a metal cup, equipped with a stirrer, a jacket for temperature control, fittings and special detachable metal feeders for feeding reagents.

Petroleum solvent (984 g), butadiene (92.62 g), styrene (30.98 g), DTHFP (4.0 ml) in petroleum solvent (0.32 M solution), and 5.95 ml of a pyrrolidine solution in petroleum solvent (0.2 M) were fed to the reactor cooled to -20°C (± 2°C) in a nitrogen flow at a stirrer rotary rate of 50 rpm. The stirrer rotary rate was set to be 300 rpm, the temperature of the reaction mass was increased to 55°C at a rate of 7°/min, and when the temperature reached 15°C, 2.88 ml of n-butyllithium in petroleum solvent (0.32 M solution) was fed. After reaching the required monomer conversion (100%), the polymer was transferred into the cup and filled with antioxidant Novantox (0.4 wt.% per 100 g of polymer) . Further, the rubber was subjected to aqueous degassing in an oil bath at 150°C. The resulting rubber containing water, was dried on rollers at a temperature of 85°C.

The characteristics of the rubber are given in Table 1. The properties of the tread rubber obtained from this rubber are shown in Table 2.

### Example 2. (comparative, according to the prototype) Polymerization in the presence of n-butyllithium and oligosiloxane Coatosil MP-200

The oligosiloxane Coatosil MP-200 has the following structure:

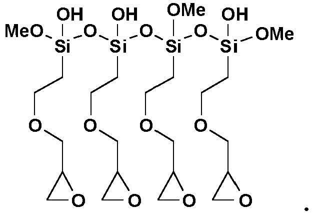

A styrene-butadiene rubber was produced in a 2L Buchi reactor with a metal cup, equipped with a stirrer, a jacket for temperature control, fittings and special detachable metal feeders for feeding reagents.

Petroleum solvent (987 g), butadiene (100.6 g), styrene (33.38 g), and DTHFP (2.9 ml) in petroleum solvent (0.32 M solution) were fed to the reactor cooled to -20°C (± 2°C) in a nitrogen flow at a stirrer rotary rate of 50 rpm. The stirrer rotary rate was set to be 300 rpm, the temperature of the reaction mass was increased to 55°C at a rate of 7°/min, and when the temperature reached 15°C, 2.5 ml of n-butyllithium in petroleum solvent (0.305 M solution) was fed. After reaching the required monomer conversion (100%), the reaction mixture was heated to 80°C, and 1.9 ml of a solution of a branching and modifying agent (Coatosil MP-200) in toluene (0.1M solution) was added, and the branching and modifying process was carried out for 30 minutes. Then, the polymer was transferred into the cup and filled with antioxidant Novantox (0.4 wt.% per 100 g of polymer). Further, the rubber was subjected to aqueous degassing in an oil bath at 150°C. The resulting rubber containing water, was dried on rollers at a temperature of 85°C.

The characteristics of the rubber are given in Table 1. The properties of the tread rubber obtained from this rubber are shown in Table 2.

### Example 3. (comparative, according to the prototype) Polymerization in the presence of n-butyllithium and oligosiloxane Silres HP1250

The oligosiloxane Silres HP1250 has the following structure

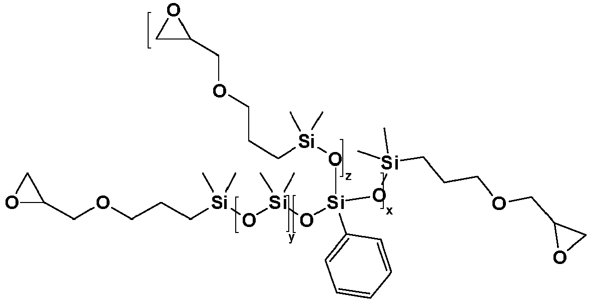

A styrene-butadiene rubber was prepared in accordance with the procedure described in Example 1, except that the used oligosiloxane was a product under trade name Silres HP1250 added in an amount of 0.3 wt.% to the obtained rubber, wherein a 5% solution in toluene was used.

The characteristics of the rubber are given in Table 1. The properties of the tread rubber obtained from this rubber are shown in Table 2.

### Example 4 Polymerization in the presence of lithium pyrrolidide and oligosiloxane Coatosil MP-200

A styrene-butadiene rubber was produced in a 2L Buchi reactor with a metal cup, equipped with a stirrer, a jacket for temperature control, fittings and special detachable metal feeders for feeding reagents.

Petroleum solvent (1008.3 g), butadiene (117.67 g), styrene (39.36 g), 3.43 ml of a pyrrolidine solution in petroleum solvent (0.2 M solution), and 2.7 ml of a solution of in petroleum solvent (0.32 M solution) were fed to the reactor cooled to -20°C (± 2°C) in a nitrogen flow at a stirrer rotary rate of 50 rpm. The stirrer rotary rate was set to be 300 rpm, the temperature of the reaction mass was increased to 55°C at a rate of 7°/min, and when the temperature reached 15°C, 2.37 ml of n-butyllithium in petroleum solvent (0.305 M solution) was fed. After 40 min the monomer conversion reached 100% (the conversion was determined based on the dry residue), the reaction mixture was heated to 80°C, and 3.61 ml of a solution of a branching and modifying agent (Coatosil MP200) in toluene (0.1M solution) was added, and the branching and modifying process ran for 30 minutes. Then, the polymer was transferred into the cup and filled with antioxidant Novantox (0.4 wt.% per 100 g of the polymer). Further, the rubber was subjected to aqueous degassing in an oil bath at 150°C. The resulting rubber containing water was dried on rollers at a temperature of 85°C.

The characteristics of the rubber are given in Table 1. The properties of the tread rubber obtained from this rubber are shown in Table 2.

### Example 5 Polymerization in the presence of lithium pyrrolidide and oligosiloxane Silres HP1250

A styrene-butadiene rubber was prepared in accordance with the procedure described in Example 4, except that the used oligosiloxane was a product under trade name Silres HP1250 added in an amount of 0.3 wt.% to the obtained rubber, used in the form of a 5% solution in toluene.

The characteristics of the rubber are given in Table 1. The properties of the tread rubber obtained from this rubber are shown in Table 2.

### Example 6 Polymerization in the presence of lithium morpholide and oligosiloxane Coatosil MP-200

A styrene-butadiene rubber was prepared in accordance with the procedure described in Example 4, except that the used initiator was lithium morpholide obtained from morpholine and n-butyllithium.

The characteristics of the rubber are given in Table 1. The properties of the tread rubber obtained from this rubber are shown in Table 2.

### Example 7 Polymerization in the presence of lithium diethylamide and oligosiloxane Coatosil MP-200

A styrene-butadiene rubber was prepared in accordance with the procedure described in Example 4, except that the used initiator was lithium diethylamide obtained from diethylamine and n-butyllithium.

The characteristics of the rubber are given in Table 1. The properties of the tread rubber obtained from this rubber are shown in Table 2.

### Example 8 (comparative). Polymerization in the presence of n-butyllithium

A styrene-butadiene rubber was produced in a 2L Buchi reactor with a metal cup, equipped with a stirrer, a jacket for temperature control, fittings and special detachable metal feeders for feeding reagents.

Petroleum solvent (987 g), butadiene (94.26 g), styrene (30.87 g), and DTHFP (1.8 ml) in petroleum solvent (0.32 M solution) were fed to the reactor cooled to -20°C (± 2°C) in a nitrogen flow at a stirrer rotary rate of 50 rpm. The stirrer rotary rate was set to be 300 rpm, the temperature of the reaction mass was increased to 55°C at a rate of 7°/min, and when the temperature reached 15°C, 1.50 ml of n-butyllithium in petroleum solvent (0.32 M solution) was fed. After reaching the required monomer conversion (100%), the polymer was transferred into the cup and filled with antioxidant Novantox (0.4 wt.% per 100 g). Further, the rubber was subjected to aqueous degassing in an oil bath at 150°C. The resulting degassed rubber was dried on rollers at a temperature of 85°C.

The characteristics of the rubber are given in Table 1. The properties of the tread rubber obtained from this rubber are shown in Table 2. The rubber obtained in example 8 is unbranched and unmodified.

### Example 9 (comparative)Commercially available rubber

Properties of a competitive rubber that is branched and modified are given in Table 1. The properties of the tread rubber obtained from this rubber are shown in Table 2.

The branching degree of the rubbers obtained in Examples 1-7 and 9 were evaluated by using gel permeation chromatography. Test conditions were as follows: sample weight of a rubber in an amount of 0.01 g was dissolved in 1 ml of tetrahydrofuran at room temperature under constant stirring with in a magnetic stirrer. The concentration of the test solutions was 10 mg/ml. Measurements were carried out in a liquid chromatograph Agillent 1200 by using an Evaporative Light Scattering Detector, on Plgel Mixed-C Column with a range of molecular weights of 500 g/mol to 3500000 g/mol. Eluent was THF. The flow rate of the eluent was 1 mL/min. The temperature in a thermostat was 25°C.

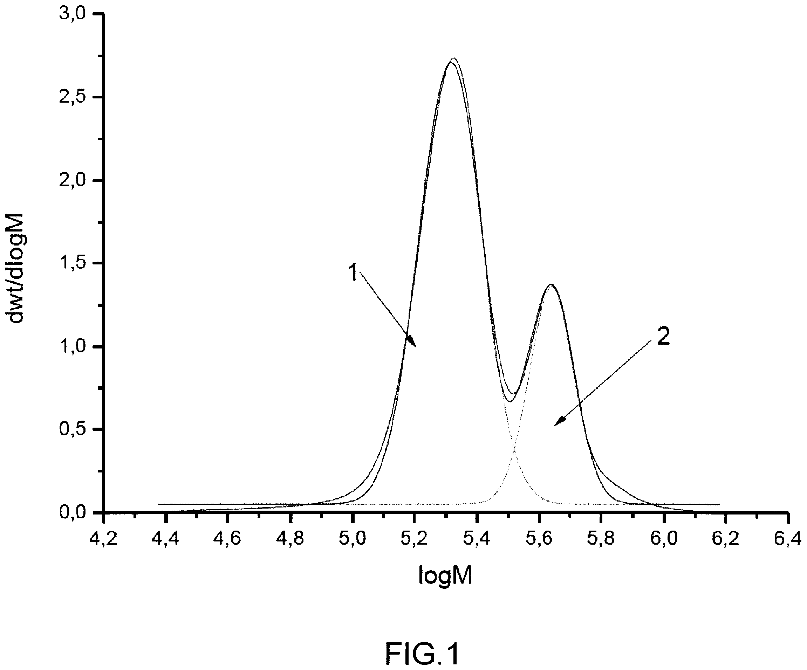

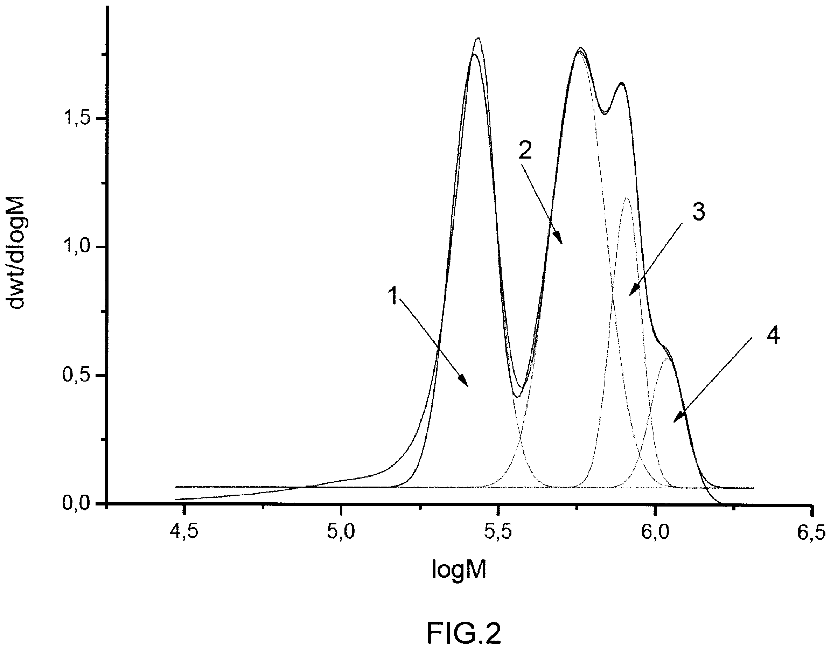

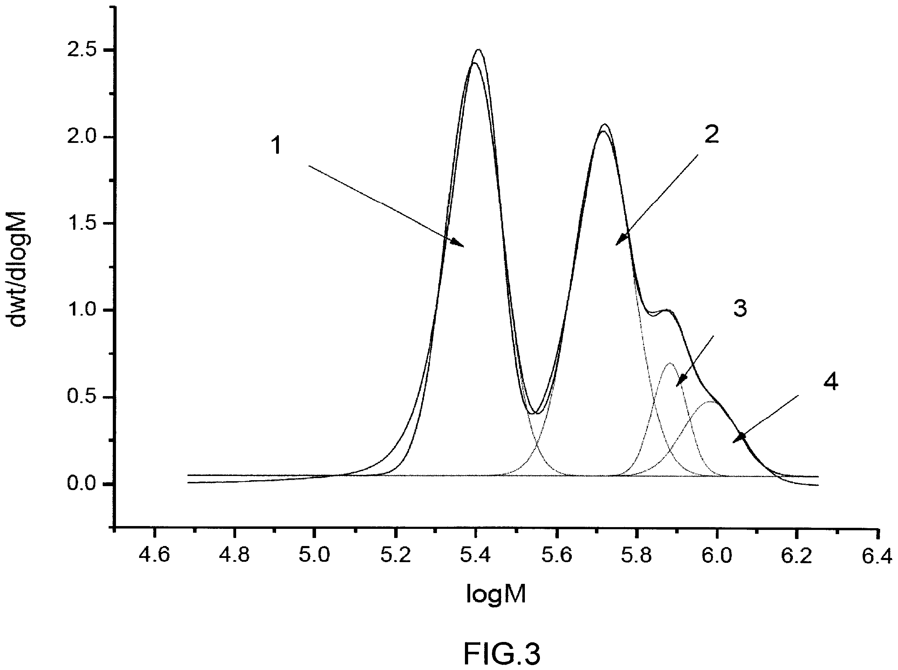

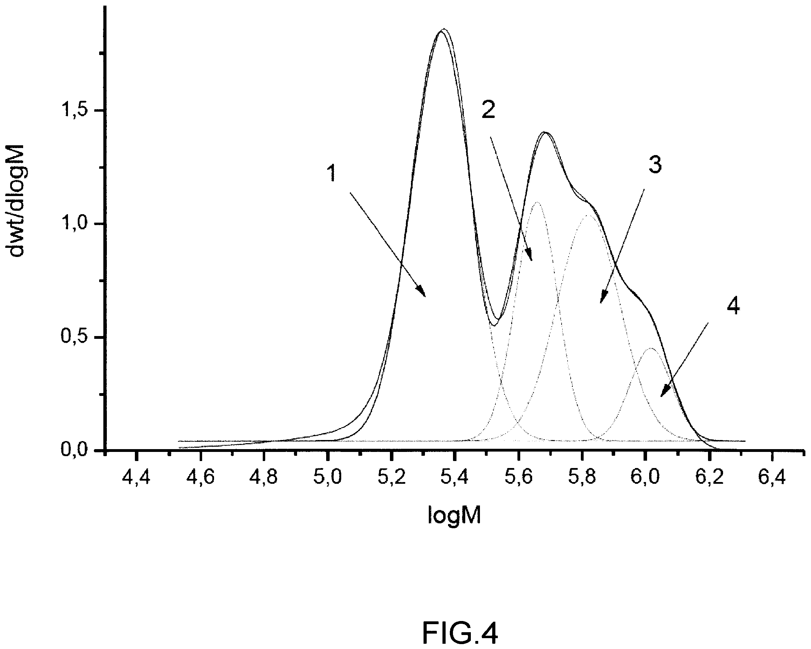

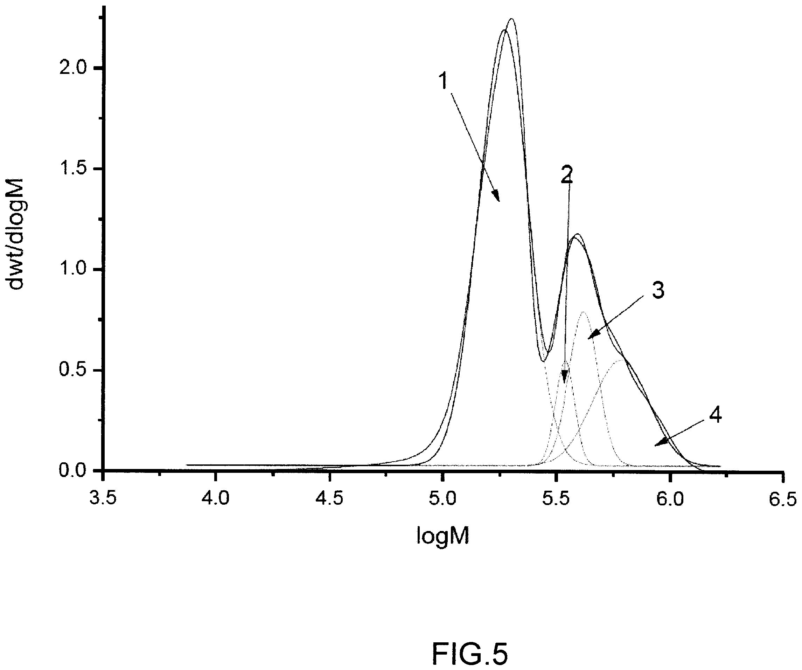

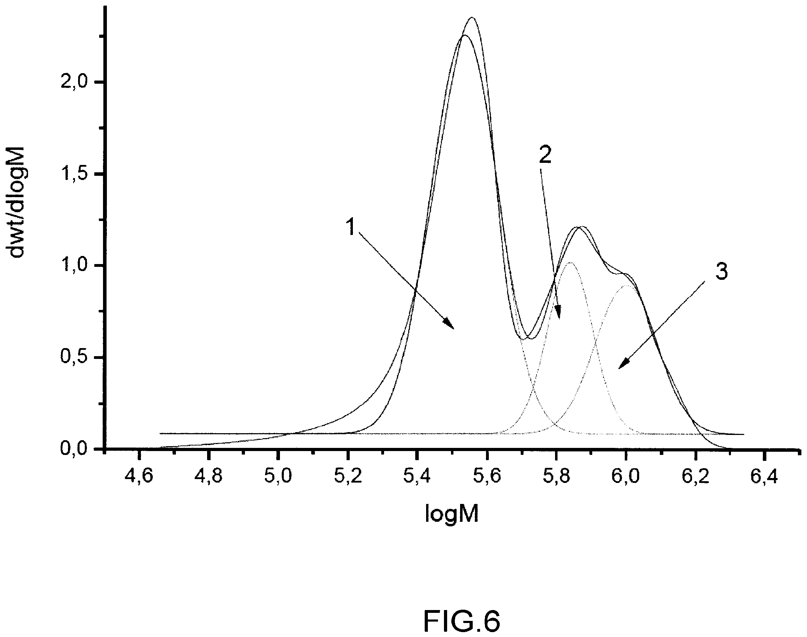

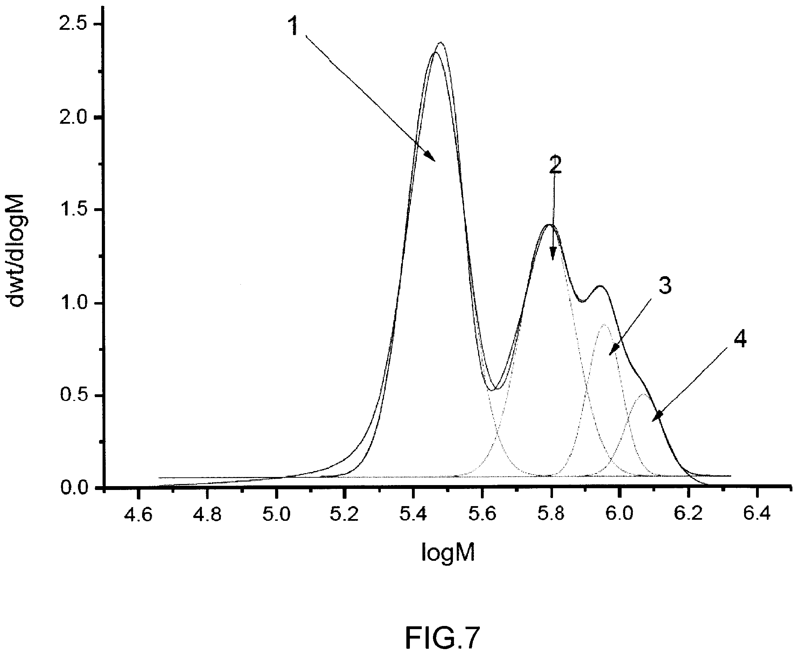

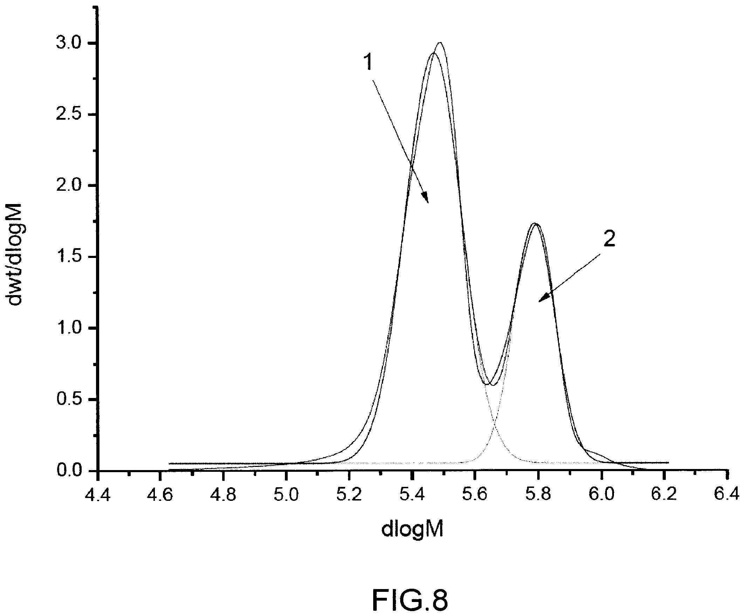

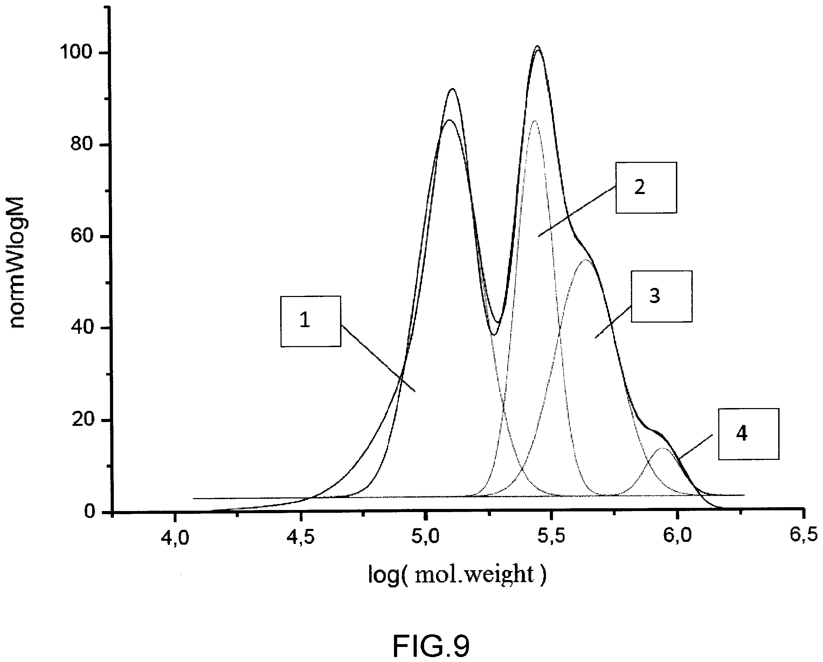

Differential curves of molecular weight distributions for the samples of the rubbers described in Examples 1-7 and 9 are shown in FIG. 1-9. It should be noted that the branched polymer prepared in Example 1 has a bimodal molecular weight distribution curve, wherein the second peak refers to the macromolecules obtained on bifunctional associates formed by the components of the initiating group. The use of the oligosiloxanes according to the invention enhances the branching degree of the rubber and is expressed in the appearance of additional (3 and 4) peaks on the differential curves of the molecular weight distribution and in an increased intensity of peak 2, as follows from FIG. 2-7.

**Table 1. Properties of rubbers described in experiments 1-9.**

| Example, No | Amount of BuLi, mmol/100 g | Amount of DTHFP, mmol/100 g | Amount of amine, mmol/100 g | Amount of a modifier, wt.% based on the rubber | Microstructure (IR assay), wt.% | | | Molecular weight characteristics, g/mol | | | | 1H NMR | Mooney viscosity, ML(1+4), 100°C | | Description of rubber |
|---|---|---|---|---|---|---|---|---|---|---|---|---|---|---|---|
| | | | | | 1,2-Bt | 1,4-trans | 1,4-cis | Mn*10⁻³ | Mw*10⁻³ | Mw/Mn | Mz*10⁻³ | St, wt.% | before oil filling | after oil filling (27%) | |
| 1 comparative | 1.0 | 0.6 | Pyrrolidine 0.95 | - | 64.2 | 17.3 | 18.5 | 220 | 278 | 1.27 | 354 | 21.2 | 83 | - | With pyrrolidine |
| 2 comparative | 0.5 | 0.6 | - | 0.3 | 66.9 | 13.8 | 19.4 | 344 | 521 | 1.51 | 677 | 23.9 | 117 | 59 | With Coatosil MP-200 |
| | Modification at 80°C | | | | | | | | | | | | | | |
| 3 comparative | 0.5 | 0.6 | - | 0.3 | 66.1 | 13.8 | 20.1 | 339 | 452 | 1.33 | 588 | 24.4 | 113 | 47 | With Silres HP1250 |
| | Modification at 80°C | | | | | | | | | | | | | | |
| 4 | 0.5 | 0.6 | Pyrrolidine 0.48 | 0.3 | 66.7 | 14.3 | 19.0 | 301 | 447 | 1.48 | 623 | 22.9 | 125 | 60 | With pyrrolidine and Coatosil MP-200 |
| | Modification at 80°C | | | | | | | | | | | | | | |
| 5 | 0.5 | 0.6 | Pyrrolidine 0.48 | 0.3 | 65.0 | 14.4 | 20.6 | 200 | 302 | 1.51 | 438 | 26.5 | 120 | 41 | With pyrrolidine and Silres HP1250 |
| | Modification at 80°C | | | | | | | | | | | | | | |
| 6 | 1.4 | 1,7 | Morpholine 1.33 | 0.3 | 67.4 | 13.0 | 19.6 | 377 | 538 | 1.43 | 732 | 24.6 | 106 | 65 | With morpholine and Coatosil MP-200 |
| | Modification at 80°C | | | | | | | | | | | | | | |
| 7 | 0.55 | 0.7 | Diethylamine 0.52 | 0.3 | 67.4 | 13.5 | 19.2 | 365 | 513 | 1.40 | 692 | 23.2 | 103 | 64 | With diethylamine and Coatosil MP-200 |
| | Modification at 80°C | | | | | | | | | | | | | | |
| 8 comparative | 0.5 | 0.6 | - | - | 66.3 | 13.9 | 19.8 | 363 | 464 | 1.28 | 572 | 22.90 | 153 | 54 | Comparative standard |
| 9 comparative | - | - | - | - | 63.3 | 19.2 | 17.8 | 133 | 240 | 1.80 | 432 | 19.30 | 94 | - | Competitive sample |

**Table 2. Properties of rubber compositions and vulcanizates**

| Parameter | Code and description of a sample | | | | | | | | |
|---|---|---|---|---|---|---|---|---|---|
| | **Example 1 comparative** | **Example 2 comparative** | **Example 3 comparative** | **Example 4** | **Example 5** | **Example 6** | **Example 7** | **Example 8 comparative** | **Example 9 comparative** |
| | Lithium pyrrolilide | Coatosil MP-200 | Silres HP1250 | Li pyrrolidide + Coatosil MP-200 | Li pyrrolidide + Silres HP1250 | Li morpholide + Coatosil MP-200 | Li diethylamide + Coatosil MP-200 | Comparative sample | Competitive sample |
| Vulcanization characteristics of rubber mixtures (***RPA-2000, 160°C × 30 min***) | | | | | | | | | |
| tₛ₁, min | 1.7 | 1.7 | 1.7 | 1.7 | 1.7 | 1.6 | 1.5 | 1.6 | 1.8 |
| t₁₀, min | 1.9 | 2.0 | 1.9 | 1.9 | 1.9 | 1.8 | 1.7 | 1.8 | 2.0 |
| t₅₀, min | 3.2 | 3.5 | 3.0 | 3.3 | 3.2 | 3.3 | 3.1 | 3.1 | 3.4 |
| t₉₀, min | 13.0 | 14.0 | 10.2 | 13.2 | 13.9 | 13.3 | 13.1 | 11.8 | 11.1 |
| M_{H}-ML, dNm | 18.9 | 14.8 | 16.1 | 17.1 | 16.8 | 14.6 | 14.8 | 15.7 | 14.8 |
| Physical and mechanical properties of vulcanizates | | | | | | | | | |
| f₁₀₀, MPa | 2.2 | 2.0 | 2.2 | 2.1 | 2.4 | 2.1 | 2.0 | 1.8 | 2.0 |
| f₃₀₀, MPa | 9.8 | 8.8 | 9.9 | 10.4 | 10.6 | 10.0 | 9.9 | 8.9 | 8.7 |
| fₚ, MPa | 17.6 | 17.1 | 17.1 | 19.0 | 18.3 | 18.4 | 18.6 | 18.0 | 16.1 |
| εᵣₑₗ, % | 500 | 530 | 480 | 500 | 480 | 500 | 500 | 530 | 520 |
| H, Shore A/15 | 58 | 59 | 59 | 58 | 60 | 60 | 59 | 58 | 59 |
| Abrasion ABR, mm³ | 192 | 193 | 191 | 184 | 183 | 190 | 194 | 191 | 181 |
| Hysteresis properties | | | | | | | | | |
| tgδ (0°C)* | 0.365 | 0.402 | 0.420 | 0.413 | 0.428 | 0.422 | 0.403 | 0.406 | 0.374 |
| tgδ (60°C)* | 0.181 | 0.184 | 0.182 | 0.164 | 0.178 | 0.172 | 0.176 | 0.183 | 0.183 |
| tgδ (60°C) ** | 0.130 | 0.127 | 0.125 | 0.112 | 0.125 | 0.120 | 0.118 | 0.131 | 0.128 |
| Change in the properties (%) as compared with Example 8 | | | | | | | | | |
| tgδ (0°C)* | 90 | 99 | 103 | 102 | 105 | 104 | 99 | 100 | 92 |
| tgδ (60°C)*, 1% | 101 | 99 | 101 | 110 | 103 | 106 | 104 | 100 | 100 |
| tgδ (60°C)**, 10% | 101 | 103 | 105 | 115 | 105 | 108 | 110 | 100 | 102 |
| Abrasion ABR | 99 | 99 | 100 | 104 | 104 | 101 | 98 | 100 | 105 |

| | | | | | | | | | |
|---|---|---|---|---|---|---|---|---|---|
| *DMA 242 C (1%, 10 Hz) **RPA-2000 (10%, 10 Hz, shift) | | | | | | | | | |

tₛ₁ - the start time of vulcanization, t₁₀ - time of reaching 10% degree of vulcanization, t₅₀ - time of reaching 50% degree of vulcanization, t₉₀ - optimal time of vulcanization, M_{H} - maximum torque, M_{L} - minimum torque, f₁₀₀ - conventional stress at 100% elongation , f₃₀₀ - conventional stress at 300% elongation, f_{P} - modulus of rupture, εᵣₑₗ - breaking elongation, H - hardness, R - rebound elasticity, ABR - Shopper-Schlobach abrasion, tgδ - mechanical loss tangent

The rubbers described in Examples 1-9 and comparative samples were tested as constituents of the rubber compositions for auto tire treads. The formulation of the rubber composition is shown in Table 3. Rubber compositions were prepared in plasticorder Plastograph EC Plus, Model 2008 ("Brabender", Germany). The free volume of the mixing chamber with bump rotors N50 EHT was 80 cm³. The mixing was carried out in three steps: step 1 comprised mixing all ingredients, except a vulcanized group (i.e. sulphur, MBT, DPG, and SAC), at the initial temperature of the chamber walls of 130°C; the maximum temperature in the chamber during the mixing process was not higher than 160°C, and the rotor speed was 40-60 rev⁻¹; step 2 comprised dispersing mixing of the mixture from step 1 without adding additional ingredients, at the initial temperature of the chamber walls of 80°C; the maximum temperature was not higher than 130°C, and the rotor speed was 60 rev⁻¹; and step 3 comprised adding the vulcanizing group to the rubber mixture at the initial temperature of the chamber walls of 80°C; the maximum temperature was not higher than 110°C, and the rotor speed was 40 rev⁻¹.

**Table 3. Composition of the rubber mixture**

| Ingredient | Amount, wt. parts per 100 rubber wt. parts |
|---|---|
| Natural rubber TSR RSS-1 | 30.0 |
| Styrene-butadiene rubber according to examples 1-9 of the present invention | 70.0 |
| Carbon black N 339 (Yaroslavskii zavod tekhnicheskogo ugleroda [Yaroslav's | 13.0 |
| factory of black carbon]) | |
| Silica Zeosil 1165 MP (Solvay) | 86.0 |
| Plastisizer Vivatec 200 (Hansen&Rosental) | 50.0 |
| Plastisizer, rapeseed industrial oil ("Profet", LLC) | 8.0 |
| Anti-aging agent 6PPD (Eastman Santoflex) | 2.5 |
| Anti-aging agent TMQ (Chemtura) | 2.0 |
| Protective waxes Antilux 111 (RheinChemie) | 2.0 |
| Zinc oxide (Empils, LLC) | 2.0 |
| Stearic acid ("Nefis Cosmetics", JSC) | 1.0 |
| Processing additive Actiplast ST (RheinChemie) | 4.0 |
| Silanizing agent Si-69 (Evonic) | 8.0 |
| Mercaptobenzithiazole (MBT-2) (Stair, China) | 0.1 |
| Diphenylguanidine (DPG) (RheinChemie) | 2.0 |
| Sulfenamide C (SAC) (Lanxess) | 2.0 |
| Ground sulfur, industrial grade, (Oil company Lukoil) | 1.7 |

The rubber compositions were prepared for vulcanization, and the vulcanization process and the preparation of samples to be tested were carried out in accordance with ASTM D 3182. The main tensile parameters of the vulcanizates (f₁₀₀, f₃₀₀, f_{P}, and εᵣₑₗ) were evaluated according to ASTM D 412-98, and the Shore A hardness and rebound elasticity were tested according to National State Standard 263-75 and National State Standard 27110-86, respectively. Shopper-Schlobach abrasion (method B) was evaluated in accordance with National State Standard 23509-79. Hysteresis properties were determined by using devices DMA 242 C (NETZSCH) and RPA-2000 (AlphaTechnology). Conditions for testing in DMA 242 C were as follows: dual cantilever bending, the specimen dimensions of 10.00 × 6.50 × 2.0 mm, amplitude of 40 µm (1%), frequency of 10 Hz, load of 7 N. Temperature ranged between (-60)°C and (+60)°C, the rate of temperature rise was 2°/min. Conditions for testing in RPA-2000 were as follows: shift, an amplitude - 10%, frequency - 10 Hz, temperature - 60°C.

Table 2 demonstrates vulcanized, physical and mechanical, and hysteresis properties of vulcanizates based on the rubbers described in Examples 1-9.

The data in Tables 1-2 show that the present invention provides rubbers capable of reducing hysteresis loss in vulcanizates. In this case, the hysteresis loss was evaluated by mechanical loss tangent (tgδ) at 60°C and strain amplitudes of 1 and 10%. Hysteresis properties measured at a given temperature in the case of tire tread vulcanizates characterize rolling loss and, as a consequence, mileage rating as a whole. In other cases, this parameter can identify the level of hysteresis losses in vulcanizates under dynamic conditions.

Indicator tgδ at 0°C is only of interest for tread vulcanizates, and characterizes their grip properties. Improved grip properties of the tread is observed at high values of tgδ at 0°C. The rubbers produced according to the invention are superior over the competitive rubber on this parameter, due to their optimized microstructure (Example 9).

As can be seen from Table 2, the branched modified competitive rubber (Example 9) has almost the same effect on the hysteresis properties of vulcanizates at 60°C as the unmodified polymers having a higher molecular weight (Example 8).

The data in Table 2 also demonstrate that the use of any one of the approaches in modifying rubbers: either the use of lithium amide (see Example 1, the rubber obtained by using the lithium pyrrolidide) as an initiator, providing functionalization of the "head" of the polymer chain; or the use of a polyfunctional oligosiloxane (Example 2, Coatosil MP-200) that provides branching and modification; or the use of oligosiloxane comprising only epoxy groups in its structure (Example 3, Silres HP1250) which also provides branching and modification, does not lead to a marked reduction in the values of tg (60°C) in vulcanizates, relative to the rubbers of Examples 8 and 9 taken as comparative standards.

A comparison of the rubbers obtained by using the lithium amide, in particular lithium pyrolidide, as an initiator, and various oligosiloxanes containing in their structure hydroxy, alkoxy, and epoxy groups (see Example 4, Coatosil MP-200); and containing only epoxy groups (see Example 5, Silres HP1250), shows that the combination of amides and oligosiloxanes improves hysteresis properties of vulcanizates, and in the case of polyfunctional oligosiloxane Coatosil MP-200, said improvement is most significant. The above data show that a combination of various lithium amides with polyfunctional oligosiloxane to modify styrene-butadiene rubbers provides, in all cases, improved tg (60°C) of vulcanizates (see Examples 4 and 6-7), and the combination of lithium pyrrolidide and oligosiloxane is most effective. It should be also noted that the rubbers modified in accordance with the present invention improve deformation-strength properties of vulcanizates, without deteriorating tgδ values (0°C). In terms of the effect on the abrasion of vulcanizates, these rubbers are similar to the comparative samples described in Examples 8 or 9. The vulcanized properties of vulcanizates are not subjected to adverse changes that would prevent them from being used according to the intended purpose.

## Claims

1. A method for producing a branched modified rubber, comprising an anionic (co)polymerization of a conjugated diene and/or a vinyl aromatic compound in the presence of an initiator and a polyfunctional modifying agent, **characterized in that** the initiator is a compound which is a reaction product of an organolithium compound and a secondary amine, and the modifying agent is an oligo- or polysiloxane containing in its structure both epoxy and alkoxy functional groups.

2. The method of claim 1, **characterized in that** the organolithium compound is an alkyllithium compound, preferable the alkyllithium compound selected from the group comprising methyllithium, ethyllithium, propyllithium, n-butyllithium, *sec*-butyllithium, *tert*-butyllithium, n-hexyllithium, n- octyllithium, phenyllithium, tolyllithium, vinyllithium, propenyllithium, tetramethylene dilithium, pentamethylene dilithium, hexamethylene dilithium, and decamethylene dilithium; more preferably n-butyllithium or *sec-*butyllithium.

3. The method of claim 1, **characterized in that** the secondary amine is a compound of the general formula: 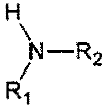 where R₁ and R₂ may be the same or different and represent a hydrocarbon group comprising from 1 to 20 carbon atoms, selected from an aliphatic group, an alicyclic group, and an aromatic group, preferable the secondary amine is a compound selected from the group comprising dimethylamine, diethylamine, dipropylamine, di-n-butylamine, diisobutylamine, dipentylamine, dihexylamine, diheptylamine, dioctylamine, dicyclohexylamine, N,N-butylisopropylamine, dibenzylamine, methylbenzylamine, methylhexylamine, and ethylhexylamine.

4. The method of claim 1, **characterized in that** the secondary amine is a compound of the general formula: 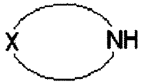 wherein X represents a (CR₃R4)ₙ group, where R₃ and R₄ are the same or different and represent a hydrogen atom or a hydrocarbon group comprising 1 to 10 carbon atoms, selected from an aliphatic group, an alicyclic group, and an aromatic group, and n is an integer from 3 to 20, wherein the amine cycle or substituents R₃ and R₄ may comprise independently from each other an oxygen atom, a sulfur atom, or a nitrogen atom having one alkyl or aryl substituent, preferable the secondary amine is a compound selected from the group comprising pyrrolidine, piperidine, hexamethyleneimine, 2-methylpiperidine, morpholine, thiomorpholine, N- methylpiperazine, and N-phenylpiperazine.

5. The method of claim 1, **characterized in that** the initiator is used in an amount of from 1 to 50 mol/t of the rubber, preferably from 2 to 25 mol/t of the rubber, more preferably from 3 to 10 mol/t of the rubber.

6. A method according to claim 1, **characterized in that** the modifying agent is an oligo- or polysiloxane of the general formula: 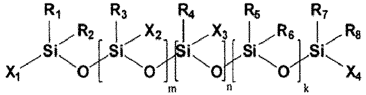 wherein R₁-R₈ are an alkoxy group with a C₁-C₂₀ alkyl chain and/or a C₁-C₂₀ alkyl group, and/or a C₆-C₁₂ aryl group; X₁ and X₄ are an epoxy group, an epoxyalkyl group, or an epoxyaryl group, for example 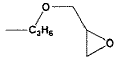 m, n, and k may be the same or different and may range from 0 to 500, preferably from 2 to 100, more preferably from 4 to 50.

7. The method of any one of claims 1-6, **characterized in that** the amount of the used siloxane is 0.01 to 10 wt.% based on the rubber, preferably 0.1 to 1 wt.% based on the rubber, more preferably 0.3 to 0.5 wt.% based on the rubber.

8. The method of claim 1, **characterized in that** the (co)polymerization is carried out in the presence of an electron-donor additive, preferably the electron-donor additive is a compound selected from a group comprising bis(2-oxolanyl)methane, 2,2-bis(2- oxolanyl)propane (ditetrahydrofurylpropane, DTHFP), 1 ,l-bis(2-oxolanyl)ethane, 2,2- bis(2-oxolanyl)butane, 2,2-bis(5-methyl-2-oxolanyl)propane, 2,2-bis(3,4,5-trimethyl-2- oxolanyl)propane, tetrahydrofuran, dialkyl ethers of mono- and oligo(alkylene glycol), crown-ethers, and tertiary amines.

9. The method of claim 8, **characterizing in that** a ratio of the electron-donor additive to the initiator is 0.5 to 4, preferably 0.8 to 2, more preferably 1 to 1.5.

10. The method of claim 1, **characterized in that** the conjugated diene is a diene comprising from 4 to 12 carbon atoms, preferably the conjugated diene is a compound or a mixture of compounds selected from the group comprising 1,3- butadiene, 2-methyl-1 ,3-butadiene (isoprene), 2-ethyl-1 ,3-butadiene, 2,3-di(C₁-C₅alkyl)-1 ,3-butadiene, such as 2, 3 -dimethyl- 1,3 -butadiene, 2, 3 -diethyl- 1,3 -butadiene, 2- methyl-3-ethyl-1,3-butadiene, 2-methyl-3-isopropyl-1 ,3-butadiene, phenyl-1 ,3- butadiene, 1 ,3-pentadiene, 2,4-hexadiene, 2-methyl-pentadiene, and 4-methyl- pentadiene; more preferably 1 ,3-butadiene and/or isoprene.

11. The method of claim 1, **characterized in that** the vinyl aromatic compound is a compound selected from the group comprising styrene, alpha-methylstyrene ortho-, meta- and para-methylstyrene, 3-vinyltoluene, ethylvinylbenzene, 4-cyclohexylstyrene, p-tert- butylstyrene, methoxystyrene, vinylmesitylene, divinylbenzene, 1 -vinylnaphthalene, and 2,4,6-trimetilstyrene; preferably styrene or alpha-methylstyrene:

12. A branched modified rubber based on a conjugated diene and/or a vinyl aromatic compound produced by the method according to claims 1-11.

13. A rubber composition, comprising the branched-modified rubber according to claim 12.

14. The rubber composition of claim 13, further comprising components selected from the group comprising a natural rubber; silica; carbon black; silanizing agent; vulcanizing agent; and traditional processing additives, such as additives improving dispersing of fillers and processability of rubber compositions; plasticizers; anti-aging agents/antiozonants/anti-fatigue agents of physical and chemical action; modifiers; fillers, including fibrous, layered, and polymer fillers; agents preventing reversion during the vulcanization and enhancing the heat-resistance of the rubber.

15. Use of the rubber composition according to claims 13-14 in the manufacture of a tire tread.

## Patentansprüche

1. Verfahren zur Herstellung eines verzweigten modifizierten Kautschuks, umfassend eine anionische (Co)polymerisierung eines konjugierten Diens und/ oder einer aromatischen Vinylverbindung in Gegenwart eines Initiators und eines polyfunktionellen Modifizierungsmittels, **dadurch gekennzeichnet, dass** der Initiator eine Verbindung ist, die ein Reaktionsprodukt einer Organolithium-Verbindung und eines sekundären Amins ist, und das Modifizierungsmittel ein Oligo- oder Polysiloxan ist, das in seiner Struktur sowohl Epoxy- als auch Alkoxy-funktionelle Gruppen enthält.

2. Verfahren nach Anspruch 1, **dadurch gekennzeichnet, dass** die Organolithium-Verbindung eine Alkyllithium-Verbindung ist, wobei die Alkyllithium-Verbindung bevorzugt aus der Gruppe umfassend Methyllithium, Ethyllithium, Propyllithium, n-Butyllithium, *sec*-Butyllithium, *tert*-Butyllithium, n-Hexyllithium, n-Octyllithium, Phenyllithium, Tolyllithium, Vinyllithium, Propenyllithium, Tetramethylendilithium, Pentamethylendilithium, Hexamethylendilithium und Decamethylendilithium; eher bevorzugt n-Butyllithium oder sec-Butyllithium, ausgewählt ist.

3. Verfahren nach Anspruch 1, **dadurch gekennzeichnet, dass** die sekundäre Aminverbindung eine Verbindung der folgenden allgemeinen Formel ist: 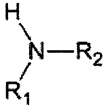 wobei R₁ und R₂ gleich oder verschieden sein können und eine Kohlenwasserstoffgruppe umfassend 1 bis 20 Kohlenstoffatome darstellen, die aus einer aliphatischen Gruppe, einer alizyklischen Gruppe und einer aromatischen Gruppe ausgewählt ist, bevorzugt das sekundäre Amin eine Verbindung ist, die aus der Gruppe umfassend Dimethylamin, Diethylamin, Dipropylamin, Din-Butylamin, Diisobutylamin, Dipentylamin, Dihexylamin, Diheptylamin, Dioctylamin, Dicyclohexylamin, N,N-Butylisopropylamin, Dibenzylamin, Methylbenzylamin, Methylhexylamin und Ethylhexylamin ausgewählt ist.

4. Verfahren nach Anspruch 1, **dadurch gekennzeichnet, dass** das sekundäre Amin eine Verbindung der folgenden allgemeinen Formel ist: 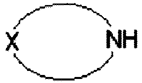 wobei X für eine (CR₃R₄)ₙ-Gruppe steht, wobei R₃ und R₄ gleich oder verschieden sind und für ein Wasserstoffatom oder eine Kohlenwasserstoffgruppe umfassend 1 bis 10 Kohlenstoffatome stehen, die aus einer aliphatischen Gruppe, einer alizyklischen Gruppe und einer aromatischen Gruppe ausgewählt ist, und n eine Ganzzahl von 3 bis 20 ist, wobei der Aminzyklus oder die Substituenten R₃ und R₄ unabhängig voneinander ein Sauerstoffatom, ein Schwefelatom oder ein Stickstoffatom umfassen können, das einen Alkyl- oder Arylsubstituent aufweist, bevorzugt das sekundäre Amin eine Verbindung ausgewählt aus der Gruppe umfassend Pyrrolidin, Piperidin, Hexamethyleneimin, 2-Methylpiperidin, Morpholin, Thiomorpholin, N-Methylpiperazin und N-Phenylpiperazin ist.

5. Verfahren nach Anspruch 1, **dadurch gekennzeichnet, dass** der Initiator in einer Menge von ab 1 bis 50 mol/t des Kautschuks, bevorzugt ab 2 bis 25 mol/t des Kautschuks, eher bevorzugt ab 3 bis 10 mol/t des Kautschuks verwendet wird.

6. Verfahren nach Anspruch 1, **dadurch gekennzeichnet, dass** das Modifizierungsmittel ein Oligo- oder Polysiloxan der folgenden allgemeinen Formel ist: 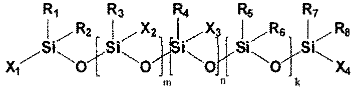 wobei R₁-R₈ eine Alkoxygruppe mit einer C₁-C₂₀-Alkylkette und/oder eine C₁-C₂₀ -Alkylgruppe, und/oder eine C₆-C₁₂ -Arylgruppe sind; X₁ und X₄ eine Epoxygruppe, eine Epoxyalkylgruppe oder eine Epoxyarylgruppe sind, zum Beispiel 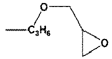 m, n und k gleich oder verschieden sein können und im Bereich von 0 bis 500, bevorzugt von 2 bis 100, eher bevorzugt von 4 bis 50 liegen können.

7. Verfahren nach einem der Ansprüche 1-6, **dadurch gekennzeichnet, dass** die Menge des eingesetzten Siloxans 0,01 bis 10 Gew.-% bezogen auf den Kautschuk, bevorzugt 0,1 bis 1 Gew.-% wt.% bezogen auf den Kautschuk, eher bevorzugt 0,3 bis 0,5 Gew.-% bezogen auf den Kautschuck, beträgt.

8. Verfahren nach Anspruch 1, **dadurch gekennzeichnet, dass** die (Co)poly-merisierung in Gegenwart eines Elektronen-Donoradditivs durchgeführt wird, bevorzugt wobei das Elektronen-Donoradditiv eine Verbindung ist, die aus einer Gruppe umfassend Bis(2-oxolanyl)methan, 2,2-Bis(2-oxolanyl)propan(di-tetrahydrofurylpropan, DTHFP), I,I-Bis(2-oxolanyl)ethan, 2,2-Bis(2-oxolanyl)-butan, 2,2-Bis(5-methyl-2-oxolanyl)propan, 2,2-Bis(3,4,5-trimethyl-2- oxola-nyl)propan, Tetrahydrofuran, Dialkylether von Mono- und Oligo(alkylenglycol), Kronenether und tertiäre Amine ausgewählt ist.

9. Verfahren nach Anspruch 8, **dadurch gekennzeichnet, dass** ein Verhältnis des Elektronen-Donoradditivs zum Initiator 0,5 bis 4, bevorzugt 0,8 bis 2, eher bevorzugt 1 bis 1,5 beträgt.

10. Verfahren nach Anspruch 1, **dadurch gekennzeichnet, dass** das konjugierte Dien ein Dien ist, das 4 bis 12 Kohlenstoffatome umfasst, bevorzugt das konjugierte Dien eine Verbindung oder ein Gemisch von Verbindungen ist, die aus der Gruppe umfassend 1,3-Butadien, 2-Methyl-1,3-butadien(isopren), 2-Ethyl-I,3-Butadien, 2,3-Di(C₁-C₅alkyl)-1,3-butadien, wie beispielsweise 2,3-Dimethyl-1,3-Butadien, 2,3-Diethyl-1,3-butadien, 2-Methyl-3-ethyl-1,3-butadien, 2-Methyl-3-isopropyl-1,3-butadien, Phenyl-1,3-butadien, 1,3-Pentadien, 2,4-Hexadien, 2-Methyl-pentadien und 4-Methyl-pentadien; eher bevorzugt 1,3-Butadien und/oder Isopren, ausgewählt sind.

11. Verfahren nach Anspruch 1, **dadurch gekennzeichnet, dass** die aromatische Vinylverbindung eine Verbindung ist, die aus der Gruppe umfassend Styrol, Alpha-Methylstyrol, Ortho-, Meta- und Para-Methylstyrol, 3-Vinyltoluol, Ethylvinylbenzen, 4-Cyclohexylstyrol, P-tert-Butylstyrol, Methoxystyrol, Vinylmesitylen, Divinylbenzen, 1-Vinylnaphthalen und 2,4,6-Trimetilstyrol; bevorzugt Styrol oder Alpha-Methylstyrol, ausgewählt ist.

12. Verzweigter modifizierter Kautschuk basierend auf einem konjugierten Dien und/oder einer aromatischen Vinylverbindung, hergestellt durch das Verfahren nach Anspruch 1-11.

13. Kautschukzusammensetzung, umfassend den verzweigten modifizierten Kautschuk nach Anspruch 12.

14. Kautschukzusammensetzung nach Anspruch 13, ferner umfassend Komponenten ausgewählt aus der Gruppe umfassend einen Naturkautschuk; Siliziumoxid; Ruß; Silanisierungsmittel; Vulkanisierungsmittel; und herkömmliche Verarbeitungshilfsstoffe, wie beispielsweise Additive, die das Dispergieren von Füllstoffen und die Verarbeitbarkeit von Kautschukzusammensetzungen verbessern; Weichmacher; Alterungsschutzmittel/Ozonschutzmittel/Ermüdungsarme Mittel von physischer und chemischer Aktion; Modifizierer; Füllstoffe, einschließlich fibröser, geschichteter Füllstoffe und Polymerfüllstoffe; Mittel, die den Umkehreffekt während der Vulkanisierung hindern und die Wärmebeständigkeit des Kautschuks erhöhen.

15. Verwendung der Kautschukzusammensetzung nach Anspruch 13-14 bei der Herstellung eines Reifenprofils.

## Revendications

1. Procédé de production d'un caoutchouc modifié ramifié, comprenant une (co)polymérisation anionique d'un diène conjugué et / ou d'un composé aromatique vinylique en présence d'un initiateur et d'un agent modificateur poly-fonctionnel, **caractérisé en ce que** l'initiateur est un composé qui est un produit de réaction d'un composé organolithien et d'une amine secondaire, et l'agent modificateur est un oligo- ou polysiloxane contenant dans sa structure à la fois des groupes fonctionnels époxy et alcoxy.

2. Procédé selon la revendication 1, **caractérisé en ce que** le composé organolithien est un composé alkyllithium, de préférence le composé d'alkyllithium est choisi dans le groupe comprenant méthyllithium, éthyllithium, propyllithium, n-butyllithium, *sec*-butyllithium, *tert-*butyllithium, n-hexyllithium, n-octyllithium, phényllithium, tolyllithium, vinyllithium, propényllithium, tétraméthylène dilithium, pentaméthylène dilithium, hexaméthylène dilithium et décaméthylène dilithium ; de préférence n-butyllithium ou sec-butyllithium.

3. Procédé selon la revendication 1, **caractérisé en ce que** l'amine secondaire est un composé de la formule générale : 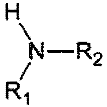 dans laquelle R₁ et R₂ peuvent être identiques ou différents et représentent un groupe hydrocarbure comprenant de 1 à 20 atomes de carbone, choisi parmi un groupe aliphatique, un groupe alicyclique et un groupe aromatique, de préférence l'amine secondaire est un composé choisi dans le groupe comprenant diméthylamine, diéthylamine, dipropylamine, di-n-butylamine, diisobutylamine, dipentylamine, dihexylamine, diheptylamine, dioctylamine, dicyclohexylamine, N,N-butylisopropylamine, dibenzylamine, méthylbenzylamine, méthylhexyla-mine et éthylhexylamine.

4. Procédé selon la revendication 1, **caractérisé en ce que** l'amine secondaire est un composé de la formule générale : 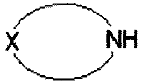 dans laquelle X représente un groupe (CR₃R₄)ₙ group, dans lequel R₃ et R₄ sont identiques ou différents et représentent un atome d'hydrogène ou un groupe hydrocarboné comprenant 1 à 10 atomes de carbone, choisis parmi un groupe aliphatique, un groupe alicyclique et un groupe aromatique, et n est un nombre entier de 3 à 20, où le cycle amine ou les substituants R₃ et R₄ peuvent comprendre indépendamment l'un de l'autre un atome d'oxygène, un atome de soufre ou un atome d'azote ayant un substituant alkyle ou aryle, de préférence l'amine secondaire est un composé choisi dans le groupe comprenant pyrrolidine, pipéridine, hexaméthylèneimine, 2-méthylpipéridine, morpholine, thiomorpholine, N-méthylpipérazine et N-phénylpipérazine.

5. Procédé selon la revendication 1, **caractérisé en ce que** l'initiateur est utilisé dans une quantité de 1 à 50 mol/t de caoutchouc, de préférence de 2 à 25 mol/t de caoutchouc, plus préférablement de 3 à 10 mol/t de caoutchouc.

6. Procédé selon la revendication 1, **caractérisé en ce que** l'agent modificateur est un oligo- ou polysiloxane de la formule générale : 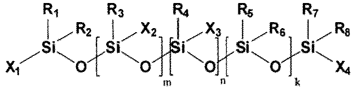 dans laquelle R₁-R₈ sont un groupe alcoxy avec une chaîne alkyle en C₁-C₂₀ et / ou un groupe alkyle en C₁-C₂₀ et / ou un groupe aryle en C₆-C₁₂ ; X₁ et X₄ sont un groupe époxy, un groupe époxyalkyle ou un groupe époxyaryle, par exemple 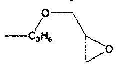 m, n et k peuvent être identiques ou différents et peuvent aller de 0 à 500, de préférence de 2 à 100, plus préférablement de 4 à 50.

7. Procédé selon l'une quelconque des revendications 1 à 6, **caractérisé en ce que** la quantité de siloxane utilisé est de 0,01 à 10% en poids sur la base du caoutchouc, de préférence de 0,1 à 1% en poids sur la base du caoutchouc, plus préférablement de 0,3 à 0,5% en poids sur la base du caoutchouc.

8. Procédé selon la revendication 1, **caractérisé en ce que** la (co)polymérisation est effectuée en présence d'un additif donneur d'électrons, de préférence l'additif donneur d'électrons est un composé choisi dans le groupe comprenant bis(2-oxolanyl)méthane, 2,2-bis(2-oxolanyl)propane (ditétrahydrofurylpro-pane, DTHFP), 1,1-bis(2-oxolanyl)éthane, 2,2-bis(2-oxolanyl)butane, 2,2-bis(5-méthyl-2-oxolanyl)propane, 2,2-bis(3,4,5-triméthyl-2-oxolanyl)propane, tétrahydrofurane, éthers dialkyliques de mono- et oligo(alkylène glycol), éthers couronnes et amines tertiaires.

9. Procédé selon la revendication 8, **caractérisé en ce qu'**un rapport de l'additif donneur d'électrons à l'initiateur est de 0,5 à 4, de préférence de 0,8 à 2, plus préférablement de 1 à 1,5.

10. Procédé selon la revendication 1, **caractérisé en ce que** le diène conjugué est un diène comprenant de 4 à 12 atomes de carbone, de préférence le diène conjugué est un composé ou un mélange de composés choisis dans le groupe comprenant 1,3-butadiène, 2-méthyl-1,3-butadiène (isoprène), 2-éthyl-1,3-butadiène, 2,3-di(C₁-C₅alkyl)-1,3-butadiène, tel que 2,3-diméthyl-1,3-butadiène, 2,3-diéthyl-1,3-butadiène, 2-méthyl-3-éthyl-1,3-butadiène, 2-méthyl-3-isopro-pyl-1,3-butadiène, phényl-1,3-butadiène, 1,3-pentadiène, 2,4-hexadiène, 2-méthyl-pentadiène, et 4-méthyl-pentadiène ; de préférence 1,3-butadiène et / ou isoprène.

11. Procédé selon la revendication 1, **caractérisé en ce que** le composé aromatique vinylique est un composé choisi dans le groupe comprenant styrène, alpha-méthylstyrène, ortho-, méta- et para-méthylstyrène, 3-vinyltoluène, éthylvinylbenzène, 4-cyclohexylstyrène, p-tert-butylstyrène, méthoxystyrène, vinylmésitylène, divinylbenzène, 1-vinylnaphtalène et 2,4,6-trimétilstyrène ; de préférence styrène ou alpha-méthylstyrène.

12. Caoutchouc modifié ramifié à base d'un diène conjugué et / ou d'un composé aromatique vinylique produit par le procédé selon les revendications 1 à 11.

13. Composition de caoutchouc, comprenant le caoutchouc modifié ramifié selon la revendication 12.

14. Composition de caoutchouc selon la revendication 13, comprenant en outre des composants choisis dans le groupe comprenant un caoutchouc naturel ; silice ; noir carbone ; agent silanisant ; agent de vulcanisation ; et des additifs de traitement traditionnels, tels que des additifs améliorant la dispersion de charges et l'aptitude au traitement des compositions de caoutchouc ; plastifiants; agents anti-âge / antiozonants / anti-fatigue à action physique et chimique ; modificateurs ; charges, y compris charges fibreuses, stratifiées et polymères ; agents empêchant la réversion lors de la vulcanisation et améliorant la résistance à la chaleur du caoutchouc.

15. Utilisation de la composition de caoutchouc selon les revendications 13 à 14 dans la fabrication de la bande de roulement de pneu.
